(19) Europäisches Patentamt
European Patent Office
Office européen des brevets

(11) Numéro de publication: **0 024 998**
**A1**

(12) **DEMANDE DE BREVET EUROPEEN**

(21) Numéro de dépôt: **80401237.5**

(22) Date de dépôt: **28.08.80**

(51) Int. Cl.³: **B 63 H 13/00**
B 63 H 7/02, F 03 D 9/00
F 03 B 17/06

(30) Priorité: **31.08.79 FR 7921904**

(43) Date de publication de la demande:
**11.03.81 Bulletin 81/10**

(84) Etats Contractants Désignés:
**DE FR GB IT NL SE**

(71) Demandeur: **Vidal, Jean-Pierre**
**2 Place des Eglantines**
**F-91540 Mennecy(FR)**

(72) Inventeur: **Vidal, Jean-Pierre**
**2 Place des Eglantines**
**F-91540 Mennecy(FR)**

(74) Mandataire: **Rinuy, Guy et al,**
**Cabinet Rinuy et Santarelli 14, Avenue de la Grande Armée**
**F-75017 Paris(FR)**

(54) **Système perfectionné pour la propulsion d'embarcations à l'aide des vents et des courants et la récupération éventuelle d'énergie.**

(57) Ce système comprend en combinaison : au moins une hélice aérienne orientable (2) à pas variable et réversible en marche et pouvant faire fonction d'aérogénérateur ou de propulseur, un dispositif de support (3) sur l'unité flottante (1) permettant d'orienter l'hélice (2), au moins une hélice nautique (4) pouvant faire fonction de turbine réceptrice d'énergie ou de propulseur, une transmission reliant l'arbre de l'hélice aérienne à l'arbre de l'hélice nautique, transmission réversible et à dispositif de conversion de couple, un dispositif directionnel (7) et des dispositifs de commande à partir du poste (20) pour agir sur au moins 2 des 3 facteurs : pas de l'hélice aérienne, rapport de transmission, pas de l'hélice nautique en fonction du vent ou du courant.

Application à la propulsion d'embarcations par toutes conditions de vent ou de courant et/ou à la récupération d'énergie d'une plate-forme flottante.

18
2
13
3
16
15
1b
8
21
14
15
7a
16
17
16
12
11
9
10
4a
15
y
4
17
20
1a
1
FIG.10

EP 0 024 998 A1

"Système perfectionné pour la propulsion d'embarcations à l'aide des vents et des courants et la récupération éventuelle d'énergie"

La présente invention concerne un système perfectionné permettant d'assurer la propulsion et l'évolution d'embarcations, à l'aide de l'énergie des courants d'eau et des vents. Ce système permet également de récupérer l'énergie des vents et des courants sur des stations flottantes non amarrées ni ancrées.

La navigation à voile utilise l'énergie du vent grâce à de nombreux types de voilures, mais celles-ci ont en commun des limitations de principe parmi lesquelles on peut citer : l'impossibilité de naviguer face au vent ; en évolution vent arrière, une vitesse de pointe nettement inférieure à celle du vent ; et, d'une façon générale, un rendement énergétique médiocre.

C'est au XVIIIe siècle que semble apparaître l'idée de capter l'énergie du vent, non plus au moyen de voiles, mais par l'intermédiaire de moulins à vent actionnant des machines à ramer ou des roues à aubes pour propulser des vaisseaux.

Par la suite, des propositions et des réalisations plus élaborées ont été tentées, mettant en oeuvre des aérogénérateurs ou éoliennes orientables, reliés mécaniquement à des hélices nautiques.

Toutefois, il est un fait que l'utilisation de l'énergie du vent pour la propulsion de navires, à l'aide de voilures tournantes, transmettant l'énergie à des hélices nautiques, quoique connue de longue date dans son principe, comme on vient de le voir, ne s'est guère développée.

Il y a, semble-t-il, deux raisons essentielles à cet état de fait, à savoir que : les techniques employées n'étaient pas bien adaptées au principe rappelé ci-dessus ; certaines possibilités, pourtant extrêmement intéressantes, n'ont pas paru réalisables ou même crédibles en leur fondement physique.

C'est ainsi, comme on le verra plus loin, qu'entre autres avantages, la navigation face au vent est parfaitement possible et que la navigation au vent arrière permet d'atteindre des vitesses supérieures à celles du vent.

De telles possibilités présentent un grand intérêt pour les transports utilitaires, mais aussi en matière sportive, puisque l'on assiste actuellement à des efforts importants pour obtenir des voilures statiques classiques l'extrême limite de leur efficacité, laquelle paraît déjà presque atteinte.

Il apparaît donc certain qu'en cette période de chèreté de l'énergie, l'idée d'utiliser l'énergie des vents pour le transport par mer en particulier, et sur terre éventuellement, semble devoir être reprise.

Ceci est d'autant plus vrai que, d'autre part, l'énergie des courants d'eau a été, jusqu'à présent, relativement peu ou mal utilisée pour le transport.

C'est ainsi que la principale utilisation consiste à exploiter essentiellement la dérive de l'embarcation, ou analogue, entraînée par le courant. D'autres utilisations des courants comportent des câbles de guidage ou de réaction, et permettent la traversée d'un cours d'eau, par exemple.

La combinaison de la poussée du vent et des courants est également utilisée, mais avec une liberté extrêmement restreinte en ce qui concerne la route de navigation par rapport aux axes du vent et du courant, ainsi qu'en ce qui concerne le contrôle de la vitesse.

Or, les courants d'eau constituent des flux d'énergie particulièrement intéressants étant donné qu'ils sont généralement moins aléatoires que les vents et peuvent être aménagés. C'est d'ailleurs cette propriété qui est utilisée de très longue date pour des stations fixes comme les moulins à eaux, les barrages hydroélectriques, etc.

La présente invention a pour objet essentiel l'application combinée de l'action des vents et de l'action des courants aux fins de permettre d'assurer non seulement la propulsion et l'évolution d'une embarcation mais encore la récupération d'énergie, à partir de stations flottantes, mobiles ou stabilisées par leurs propres moyens, ces stations n'étant ni amarrées ni ancrées.

Dans le cas plus particulier de récupération d'énergie utilisable, cette dernière résulte, comme on le verra en détail plus loin, du mouvement relatif entre les deux phases eau et air. C'est la raison pour laquelle, d'ailleurs, lorsque les vecteurs vitesse du vent et vitesse du courant, par rapport à un repère fixe lié à la terre, sont égaux, il n'y a pas d'énergie récupérable. Dans ce cas, et ce cas seulement, le système suivant l'invention n'est pas opérant, pour des raisons fondamentales et non pas techniques, pour la récupération d'énergie utilisable à l'extérieur.

Dans tous les autres cas, le système suivant l'invention est susceptible de recueillir l'énergie utilisable, notamment s'il y a, à la fois, courant et vent sensibles mais de vecteurs distincts, comme par exemple dans le cas d'un courant sensible avec un vent presque nul ou dans le cas d'un vent sensible avec un courant faible ou nul.

Bien évidemment, l'énergie ainsi récupérée conformément à l'invention, peut être consommée ou transportée pour toute utilisation adéquate, ou bien utilisée pour la propulsion de l'unité flottante sur laquelle le système est monté.

Le système perfectionné conforme à l'invention se caractérise essentiellement en ce qu'il comprend, en combinaison :

- au moins une hélice aérienne pouvant être à pas variable en marche et susceptible d'être inversé également en marche, ladite hélice étant orientable dans toute direction azimutale contenue dans un plan sensiblement horizontal et pouvant faire fonction d'aérogénérateur ou d'hélice propulsive, alternativement ;
- un dispositif de support en superstructure sur l'unité flottante permettant d'orienter, à volonté, ladite hélice aérienne dans la direction du vent ;
- au moins une hélice nautique pouvant être à pas variable en marche, montée sous la carène de l'unité flottante, ladite hélice nautique pouvant faire fonction de turbine réceptrice d'énergie ou de propulseur alternativement ;

- un système de transmission reliant l'arbre de l'hélice aérienne à l'arbre de l'hélice nautique, ladite transmission étant réversible et pouvant comporter un dispositif de conversion de couple permettant de choisir en marche le sens de la transmission ainsi que le rapport de transmission ;

- un dispositif directionnel d'un type quelconque connu permettant d'assurer l'évolution de l'unité flottante ;

- et des dispositifs de commande à la disposition du conducteur permettant à ce dernier d'agir à volonté, en dehors de son action sur le dispositif directionnel et sur l'orientation en azimut de l'hélice aérienne, sur au moins deux des trois facteurs variables du système qui sont : le pas de l'hélice aérienne ; le rapport de transmission ; le pas de l'hélice nautique, ceci en fonction du but à atteindre et des conditions aussi bien éoliennes que marines auxquelles est soumise l'unité flottante.

D'autres caractéristiques, avantages et particularités de la présente invention ressortiront de la description qui en est donnée ci-après, en référence aux dessins annexés sur lesquels :

- la figure 1 est un schéma du principe fondamental sur lequel est basé le système perfectionné conforme à l'invention ;

- les figures 2, 3, 4, 5, 6, 7, 8 et 9 sont des schémas permettant d'expliquer le fonctionnement du système perfectionné selon l'invention, soumis à différentes conditions de vent et de courant ; et

- la figure 10 est une vue en perspective d'une embarcation à caractère sportif mettant en oeuvre l'invention.

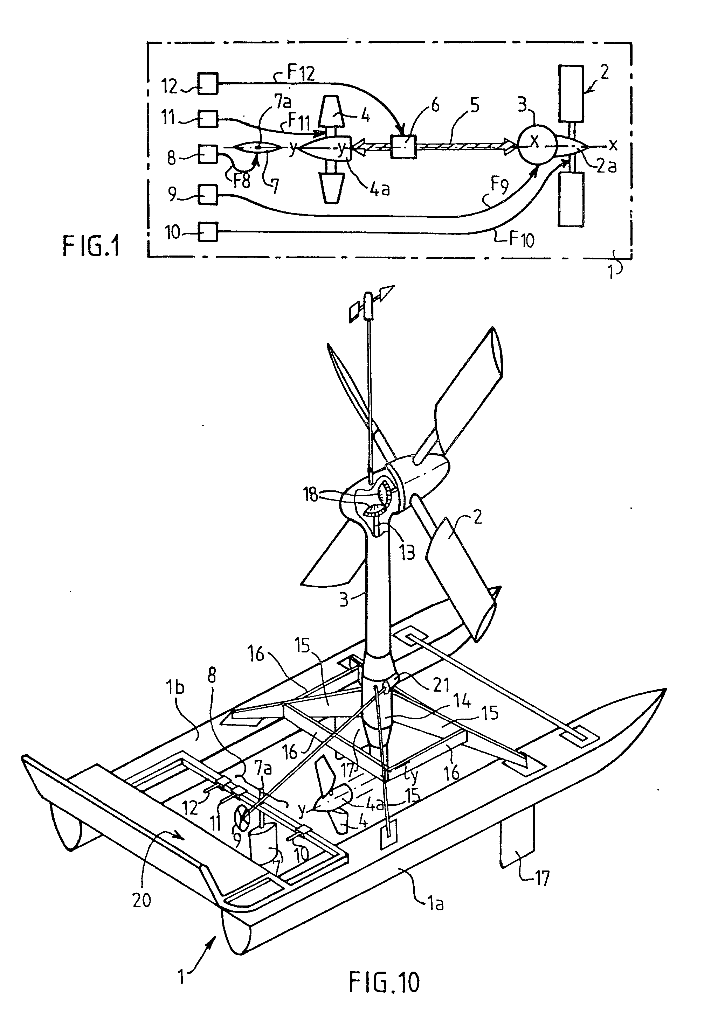

En se reportant au schéma de la figure 1, on voit que le système conforme à l'invention, monté sur une unité flottante schématisée par le rectangle 1, comprend essentiellement :

- au moins une hélice aérienne 2 d'axe x-x sensiblement horizontal, orientable dans toute direction azimutale, par le fait qu'elle est montée à l'extrémité supérieure d'un pylone de support 3, rotatif autour de son axe longitudinal. Cette hélice est munie de préférence d'un dispositif de pas variable en marche et d'inversion de pas également variable en marche ; ce dispositif d'un type quelconque connu est agencé dans le carter 2a de l'hélice. Enfin, l'hélice 2 est d'un type susceptible de faire, alternativement, fonction d'aérogénérateur ou d'hélice propulsive ;

- sous la carène de l'embarcation 1, au moins une hélice nautique 4, d'axe y-y sensiblement horizontal, et pouvant être munie d'un dispositif de pas variable en marche agencé dans le carter 4a ;

- une transmission avantageusement mécanique schématisée par la flèche 5, reliant l'arbre de l'hélice aérienne 2 à l'arbre de l'hélice nautique 4. Cette transmission est d'un type réversible et elle est éventuellement munie d'une boîte de vitesse ou d'un système de conversion de couple schématisé en 6. Il est à noter que du point de vue fonctionnement il revient au même de munir l'une des deux hélices aérienne ou nautique d'un système d'inversion de pas ou bien de munir la transmission d'un dispositif d'inversion de sens de transmission de couple (marche arrière ou inversion de marche) ;

- un gouvernail 7 est monté sur la carène de l'embarcation 1 avec son axe de rotation 7a dans le plan vertical contenant l'axe y-y de l'hélice nautique 4. Une dérive (non représentée) est avantageusement prévue, sous la carène de l'embarcation 1, dans le même plan vertical contenant l'axe y-y de l'hélice nautique 4. Bien évidemment, on ne sortirait pas du cadre de l'invention en supprimant le gouvernail et la dérive et en rendant l'hélice nautique 4 orientable en toute direction azimutale pour assurer la direction de l'embarcation 1 ;

- un ensemble de dispositifs de commande placés à la disposition du pilote et schématisés sur la figure 1 par des carrés et des flèches, à savoir :

. le carré 8 et la flèche $F_8$ pour commander l'orientation du gouvernail 7 ;

. le carré 9 et la flèche $F_9$ pour commander l'orientation azimutale de l'hélice aérienne 2 ;

. le carré 10 et la flèche $F_{10}$ pour régler le pas de l'hélice aérienne et, éventuellement, son inversion ;

. le carré 11 et la flèche $F_{11}$ pour régler le pas de l'hélice nautique 4 et, éventuellement, son inversion ; et

. le carré 12 et la flèche $F_{12}$ pour régler la valeur du rapport de la transmission 5 et, éventuellement, le sens de la transmission.

On va maintenant décrire le fonctionnement et l'utilisation du système selon l'invention dont on vient de définir ci-dessus le principe fondamental de base de sa combinaison, en se référant tout d'abord aux quatre cas limites de base qui sont :

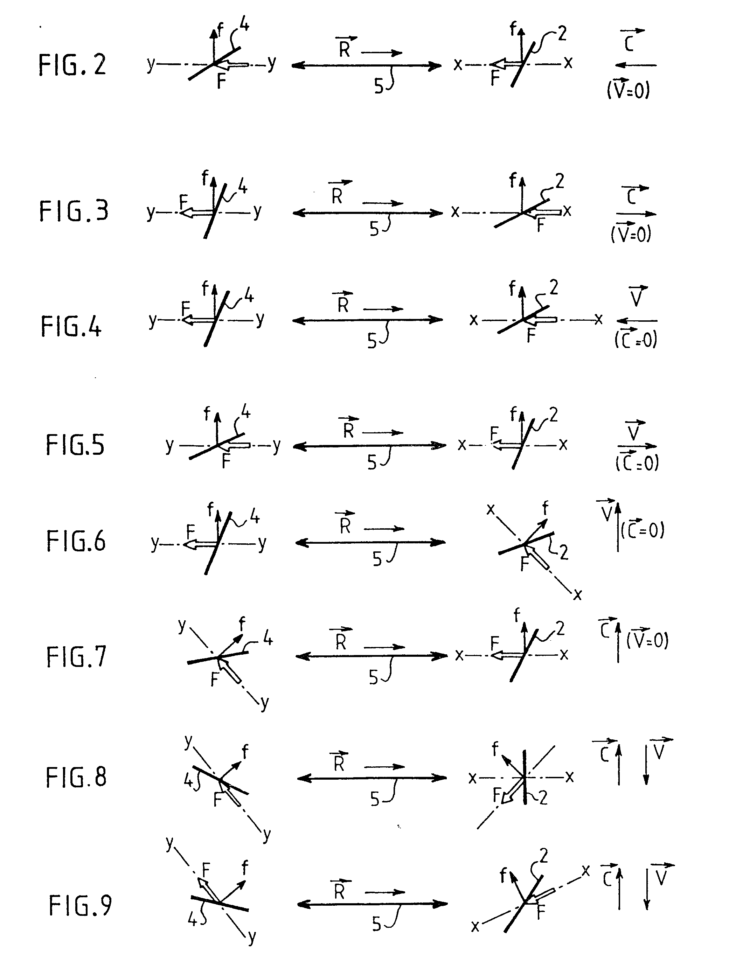

- sans vent avec courant de face (figure 2)
- sans vent avec courant arrière (figure 3)
- sans courant avec vent de face (figure 4)
- sans courant avec vent arrière (figure 5)

Dans toutes ces situations limites étudiées, les deux hélices, aérienne 2 et nautique 4, ont des axes, x-x pour la première, y-y pour la seconde, rendus parallèles, grâce au dispositif d'orientation 9-$F_9$, et maintenus ainsi.

Pour avoir une bonne compréhension des schémas et afin de pouvoir les comparer entre eux et mettre en évidence les moyens de réglage et d'orientation des pas et de transmission, on a adopté les différentes représentations suivantes :

Chacune des hélices est représentée par l'extrémité en coupe de sa pale supérieure, 2 pour l'hélice aérienne, 4 pour l'hélice nautique, par son axe de rotation x-x pour l'hélice aérienne et y-y pour l'hélice nautique, par son sens de rotation f pour les deux hélices , par la flèche F sur la pale en pression pour les deux hélices.

Si la flèche F est dirigée vers la pale, cela indique que l'hélice correspondante reçoit de l'énergie du fluide dans lequel elle est plongée, et la transmet par le couple et le mouvement de rotation sur son arbre. Si la flèche F est à contresens de la pale, cela indique que l'hélice correspondante transmet de l'énergie au fluide dans lequel elle est plongée ; elle a alors une fonction propulsive, ce qui ne signifie pas qu'elle assure nécessairement par cet effet, toute l'action de propulsion.

Pour la compréhension du fonctionnement de principe de ces cas limites, il n'est pas indispensable de disposer de tous les systèmes de réglage de pas et de transmission indiqués plus haut.

C'est ainsi que, conventionnellement et seulement pour la simplification de ces schémas et leur explication, on considèrera que les deux hélices ont des pas variables, mais non nécessairement réversibles, et que la transmission réversible mécaniquement ne comporte ni conversion de couple ni inversion de sens de transmission de couple (marche arrière) ; c'est une transmission directe.

La ligne en trait continu 5 représente cette transmission desmodromique entre les deux hélices, la vitesse du vent est représentée par les vecteurs $\vec{V}$, la vitesse de courant d'eau est représentée par les vecteurs $\vec{C}$, et la vitesse de l'embarcation par rapport à l'air dans les cas où il y a courant, en l'absence de vent, ou par rapport à l'eau dans les cas où il y a vent en l'absence de courant, par les vecteurs $\vec{R}$.

Selon la figure 2, l'hélice nautique 4 reçoit de l'énergie du courant, l'hélice aérienne 2 communique l'énergie reçue par l'intermédiaire de la transmission 5 à l'atmosphère. La résultante axiale de la traînée de l'hélice hydraulique 4 et les forces hydrodynamiques sur la carène sont compensées par la poussée de l'hélice aériennce 2, propulsive dans le sens à contrecourant, et un excédent d'énergie est disponible pour la propulsion sous réserve de régler convenablement les pas des hélices. En effet, on peut trouver des positions de pas telles que les couples des deux hélices soient opposés et en équilibre. Dans ce cas, la transmission transmet le couple, mais pas d'énergie car elle ne tourne pas. L'embarcation dérive alors dans le courant, légèrement freinée par la traînée dans l'air de l'hélice aérienne. L'équilibre peut être rompu par action sur le pas de l'une ou de l'autre hélice, ou des deux.

Ces actions consistent à agir sur l'hélice nautique 4, dans le sens de l'augmentation de pas, et sur l'hélice aérienne 2, dans le sens de la diminution de pas. Dans ce cas, le couple de l'hélice nautique 4 augmente et entraîne l'hélice aérienne 2 qui devient ainsi propulsive. A mesure que les hélices prennent de la vitesse, le pas de l'hélice nautique 4 peut être réduit, et le pas de l'hélice aérienne 2 augmenté progressivement et modérément.

Dans le cas où des modifications de pas à partir de la position d'équilibre des couples auraient été faites dans le sens inverse de celui indiqué ci-dessus, c'est-à-dire dans le sens diminution de pas de l'hélice nautique 4 et augmentation de pas de l'hélice aérienne 2, les hélices se mettraient à tourner dans le sens inverse des flèches f, et l'embarcation progresserait dans le sens du courant. Cette utilisation est représentée à la figure suivante 3, par rapport à un courant ayant changé de sens.

Selon cette figure 3, le courant exerce une poussée directe sur l'hélice nautique 4 qui présente un pas relativement faible ; l'embarcation tend donc à dériver dans le courant. L'hélice aérienne 2, qui présente un pas relativement fort, entre en rotation sous l'effet du vent relatif, dans le sens f et reçoit un couple important transmis à l'hélice nautique 4, laquelle tourne dans le sens propulsif, la force résultante de celle-ci s'ajoutant à la poussée directe du courant. Le système a alors pour effet d'augmenter la poussée du courant, et donc le rendement énergétique. Ce système étant suffisamment dimensionné par rapport à l'embarcation et réalisé suivant les règles de l'art et du point de vue rendement de transmission mécanique, l'embarcation ainsi équipée et utilisée, peut atteindre une vitesse supérieure à la vitesse du courant.

Les figures 4 et 5 sont similaires aux figures 2 et 3, mais les fonctions des hélices ayant été respectivement échangées.

Selon la figure 4, l'hélice aérienne 2 reçoit de l'énergie du vent de face, l'hélice nautique 4 est propulsive et fait progresser l'embarcation dans le sens contraire au vent. Une position d'équilibre entre les couples opposés des deux hélices peut être obtenue, tout comme il a été indiqué ci-dessus à propos de la figure 2. Le réglage de pas doit être tel, que le couple de l'hélice aérienne 2 dans le sens f, soit suffisameent élevé; il entraîne l'hélice nautique 4 dans le sens f, et celle-ci est alors propulsive.

Lorsque la vitesse augmente, il est favorable de réduire le pas de l'hélice aérienne 2 et d'augmenter le pas de l'hélice nautique 4 dans des proportions modérées.

Selon la figure 5, l'hélice aérienne 2, réglée à petit pas, reçoit la poussée directe du vent. Sous l'effet de la dérive, l'hélice nautique 4 reçoit une poussée résultant de la vitesse relative de l'eau, ce qui produit un couple dans le sens f. L'hélice nautique 4 est réglée à grand pas au démarrage, de façon à entraîner l'hélice aérienne 2 dans le sens propulsif, par un couple suffisant.

A mesure que les vitesses des organes tournant et de l'embarcation augmentent, le pas de l'hélice aérienne 2 peut être augmenté, et le pas de l'hélice hydraulique 4 diminué modérément.

Dans tous les cas, la vitesse de l'embarcation peut être contrôlée par le réglage des pas, et la vitesse maximale peut être recherchée en fonction des paramètres de construction, et des paramètres d'utilisation : vitesse de courant et de vent, charge, à l'aide des réglages de pas. On peut aussi aisément obtenir une vitesse nulle et donc une position sensiblement stationnaire, en se plaçant dans l'une des situations : vent de face ou courant de face, en diminuant le pas de l'hélice propulsive, et en augmentant le pas de l'autre hélice de façon à diminuer la force de poussée propulsive à la quantité juste nécessaire pour équilibrer les traînées et les forces de dérive.

La transmission mécanique 5 a été envisagée, dans ces exemples schématiques, directe et invariante, mais comme il a été dit plus haut, elle peut comporter une boîte de vitesse ou un système de conversion de couple. La conversion de couple et de mouvement qui lui est lié peuvent, d'une part, avoir un effet complémentaire des effets des variations de pas envisagés ci-dessus, et, d'autre part, favoriser une vitesse de rotation élevée pour l'hélice réceptrice d'énergie, dont le rendement est meilleur à vitesse relativement élevée. Par contre, l'hélice qui transmet l'énergie au milieu, ne doit pas avoir une vitesse trop élevée pour réduire les pertes mécaniques, et éviter les phénomènes de cavitation dans le cas de l'hélice nautique, et les régimes soniques en bout de pale dans le cas de l'hélice aérienne.

Selon le système de la présente invention, toutes les autres directions de progression sont également possibles.

Selon la figure 6, représentée avec les mêmes conventions que les figures 2, 3, 4 et 5, un vent de travers composé avec la vitesse de l'embarcation, produit un vent apparent, selon lequel l'axe x-x de l'hélice aérienne 2 est dirigé. L'hélice aérienne 2 est réceptrice d'énergie et transmet le couple dirigé selon f à l'hélice nautique 4 entraînée dans le sens f, elle est alors propulsive. Cette figure 6 correspond à un cas, en l'absence de courant.

La traînée axiale de l'hélice aérienne 2 et les forces de dérive sur l'embarcation peuvent alors être compensées par les dispositifs classiques, tel que la dérive (qui peut être escamotable), correction par gouvernail ou orientation de l'hélice nautique 4.

Toujours dans le cas d'un courant nul et un vent quelconque non nul, le changement de cap de l'embarcation peut se faire avec les moyens classiques de gouvernes, en maintenant l'axe de l'hélice aérienne 2 dans l'axe du vent apparent à l'aide du système d'orientation cité. Toutefois, en arrivant, le cas échéant, en position sensiblement vent arrière à partir d'un vent portant par exemple, le dispositif ne se trouve pas dans la configuration schématisée à la figure 5, car l'hélice aérienne 2 est réceptrice d'énergie, et n'a pas la fonction propulsive avantageuse signalée. C'est alors qu'intervient l'inversion de pas de l'une des hélices ou l'inversion de sens de transmission qui ont été mentionnés, et ensuite, un réglage des pas comme indiqué ci-dessus, est effectué.

Un autre type de manoeuvre, présentant toutefois des inconvénients, permet de se dispenser des organes d'inversion de pas ou de transmission. Il consiste à utiliser le dispositif d'orientation de l'hélice aérienne 2, en faisant varier l'azimut de celle-ci d'un demi-tour, au moment de passer d'un vent portant à un vent arrière.

Un fonctionnement similaire peut être obtenu dans le cas de l'utilisation des courants en l'absence de vent.

Selon le schéma de la figure 7, en l'absence de vent, un courant est reçu transversalement par rapport à la route suivie. Le courant apparent résultant de la composition de la vitesse de l'embarcation et du courant réel, agit dans l'axe y-y de l'hélice nautique 4 réceptrice d'énergie. Ainsi disposée, l'hélice aérienne 2 est propulsive. Les pas sont réglés selon les principes évoqués ci-dessus, de façon que l'hélice nautique 4 fournisse un couple suffisant pour entraîner l'hélice aérienne 2, par l'intermédiaire de la transmission. Une dérive se produit par l'effet du courant sur l'hélice et la carène de l'embarcation ; elle peut être compensée par commande du gouvernail agissant au voisinage d'une position située selon le courant apparent.

Pour obtenir le maximum d'efficacité dans ce type d'utilisation, il est préférable que la carène de l'embarcation soit peu directive et offre peu de résistance au courant dans le sens latéral.

On verra ci-dessous que pour certaines utilisations des courants, cette dernière caractéristique n'est pas indispensable.

L'utilisation des vents et courants combinés est basée sur une analyse de chaque situation, en considérant le vecteur vent, le vecteur courant et la route à suivre. Cette analyse peut s'appuyer sur la décomposition des situations par rapport aux six cas types signalés ci-dessus.

Certaines situations caractérisées par un vent, un courant et une route, déterminés dans leurs positions relatives, constituent également des cas limites particuliers.

On a vu que si le courant et le vent présentent des vecteurs sensiblement égaux, le système de la présente invention est inopérant, une seule route est possible : c'est celle qui résulte de la dérive. C'est d'ailleurs le cas également du voilier classique.

Un cas favorable par contre, est celui d'un courant de sens sensiblement opposé au vent. Pour suivre une route opposée au courant, on se placera dans une configuration similaire à celle de la figure 2, et on bénéficiera en outre de la poussée directe du vent, telle qu'elle est illustrée à la figure 5. Pour suivre une route opposée au vent, on se placera dans une configuration similaire à celle de la figure 4, et on bénéficiera en outre de la poussée directe du courant, telle qu'elle est illustrée à la figure 3. Dans ce même cas, mais pour suivre une direction sensiblement perpendiculaire aux axes du vent et du courant, l'énergie nécessaire pourra être puisée dans l'un des fluides et transmise à l'autre, selon deux configurations possibles représentées figures 8 et 9.

Bien entendu, on choisira la plus avantageuse des configurations qui dépend des vitesses des deux milieux, des caractéristiques de l'embarcation et de la réalisation du dispositif.

Pour ces deux dernières situations, il est favorable que la carène soit peu directive et que l'hélice nautique 4 soit orientable dans toutes les directions azimutales, si l'on recherche la performance maximale.

On pourra déterminer aisément les configurations intermédiaires correspondant à des routes quelconques, à condition de disposer les axes des hélices respectivement selon les vitesses apparentes du vent et du courant.

Dans le cas le plus général, on considèrera les composantes des vecteurs vent et courant sur l'axe de la route à suivre. Si ces composantes sont sensiblement égales, la direction opposée à ces composantes ou des directions voisines, ne sont pas favorables. L'énergie est puisée dans celui des milieux permettant d'en recueillir un maximum par rapport à l'autre, avec l'hélice correspondante. L'autre hélice reçoit bien entendu une fonction propulsive.

Si les composantes des vecteurs sont opposés, la situation est plus favorable, l'hélice qui recevra la fonction réceptrice d'énergie est celle dont le milieu fluide présente le vecteur opposé à la route à poursuivre. L'autre hélice reçoit alors une fonction propulsive.

Les dimensionnements des hélices sont faits en fonction des dimensions des embarcations considérées, selon les règles de l'art, relatives aux diverses fonctions envisagées : l'hélice aérienne 2 propulsive ou aérogénérateur, hélice nautique 4 propulsive ou turbine réceptrice. Il en est de même des dispositifs de transmission mécanique qui doivent présenter un bon rendement énergétique.

Le système de la présente invention peut recevoir diverses applications et faire l'objet de diverses réalisations selon le degré de spécialisation envisagé.

Quelques-unes des réalisations, dont la liste n'est pas limitative, sont décrites ci-dessous, à titre d'exemples.

Selon une réalisation particulière de la présente invention, celle-ci permet de traverser une rivière à l'aide d'une embarcation ou d'un bac équipé du système suivant: Une embarcation est munie d'au moins une hélice nautique 4, faisant fonction de turbine réceptrice de l'énergie du courant de la rivière. L'axe y-y de cette hélice est orienté face au courant. L'arbre de l'hélice est relié mécaniquement à une hélice aérienne propulsive 2. L'hélice aérienne 2 propulsive présente un axe de rotation x-x sensiblement parallèle à l'axe de l'hélice nautique, et sa force de propulsion, résultant de sa rotation entraînée par la transmission, est dirigée grâce à une orientation convenable du pas, dans le sens inverse du courant.

L'embarcation est munie d'au moins un gouvernail, dont la position médiane est dans le plan vertical de l'axe de l'hélice nautique 4. Une dérive verticale est disposée sous la carène dans ce même plan. Les axes des hélices ne sont pas nécessairement orientables en azimut; l'hélice aérienne 2 présente un pas variable en marche.

Le vent est supposé nul ou faible car, dans le cas contraire, on devrait tenir compte des principes fondamentaux exposés plus haut, et des limitations qui en résulteraient.

Le fonctionnement du système est alors le suivant :

- l'embarcation est amarrée à son poste de départ sur l'une des rives, de telle sorte que les axes des hélices soient disposés selon le courant, et avec l'orientation correspondant à leurs fonctions définies ci-dessus,

- le pas de l'hélice aérienne 2 est réglé de façon à assurer une force propulsive suffisante pour compenser les forces de dérive résultant des actions du courant,

- l'embarcation est libérée de ses amarres, et son évolution dans le courant est contrôlée par commande du gouvernail et du pas de l'hélice aérienne 2 propulsive,

- un déplacement perpendiculaire au lit du courant est obtenu par orientation de l'ensemble, par effet de la commande du gouvernail, de façon que la dérive fixe reçoive du courant des forces dirigées sensiblement vers la rive opposée. A l'aide du réglage de pas de l'hélice aérienne 2, l'embarcation est maintenue au voisinage de la ligne droite définie par les centres des deux postes sur les rives,

- un moteur de secours peut être prévu, qui est également utilisable dans les situations défavorables, résultant notamment d'un vent sensible dans le sens du courant.

Dans une telle réalisation, l'embarcation peut présenter une coque plate, offrant une grande surface de chargement.

Dans une autre réalisation particulière de la présente invention, une embarcation est équipée d'un système lui permettant de progresser dans le sens d'un cours d'eau, en le remontant ou en le descendant. Le système est mécaniquement similaire à celui exposé dans le cas précédent ci-dessus, étant à noter toutefois, que l'embarcation présente une forme différente. Cette embarcation est en effet de préférence de forme allongée ;les hélices présentent des axes sensiblement parallèles, dirigés selon le grand axe de l'embarcation.

A partir d'une situation similaire à celle définie pour le cas précédent, par réglage du pas de l'hélice aérienne, le mouvement de l'embarcation peut être obtenu en remontant le courant ou en le descendant. Si l'on désire obtenir de bonnes performances dans le sens de la descente du courant, une configuration semblable à celle schématisée sur la figure 3 doit être adoptée. Le système doit alors être muni d'un dispositif de réglage de pas de l'hélice nautique et de la conversion de couple sur la transmission.

La descente du courant est alors assurée selon un fonctionnement décrit ci-dessus en référence à la figure 3, ce qui se traduit, si l'on ne change pas l'orientation de l'embarcation pour passer de la progression à contrecourant à la progression à co-courant, par une inversion de sens de rotation des hélices. Les fonctions des hélices sont alors changées : l'hélice nautique recevant une fonction propulsive ajoutée à celle du courant, et l'hélice aérienne fonctionnant en aérogénérateur.

Le déplacement transversal par rapport au cours d'eau peut se faire selon les modalités définies pour l'exemple précédent.

Des performances plus élevées en déplacement transversal peuvent être obtenues par un système muni en outre, d'un système d'orientation azimutale de l'hélice aérienne selon les modalités définies plus haut, ce qui présente également l'avantage d'une meilleure prise en compte des vents, lorsque ceux-ci sont sensibles.

Dans une autre application particulière de la présente invention, un système similaire à celui exposé ci-dessus, pour les deux réalisations précédentes, est monté sur une plate-forme flottante, avec, toutefois, cette différence que de l'énergie est prélevée en quantité importante sur l'une des deux hélices. Les dimensionnements des hélices sont faits en fonction des conditions d'exploitation qui comporte la production d'énergie, ainsi rendue possible sur une station mobile qui peut être disposée, soit dans un courant, soit dans une zone ventée et dégagée, en pleine mer par exemple.

Le fonctionnement est assuré principalement selon l'une des configurations 2 ou 4 selon que l'on exploite un courant ou le vent.

L'hélice qui reçoit la fonction propulsive est alors réglée pour assurer seulement la stabilisation de la station à une vitesse nulle ou faible. Dans le cas du courant, cette stabilisation comporte également l'usage d'au moins un gouvernail. Dans le cas de l'exploitation du vent, un plan vertical mobile peut être utilisé pour cette stabilisation.

Les réglages de pas et de transmission sont effectués afin d'obtenir le maximum d'énergie, ce qui peut être contrôlé par un instrument de mesure de puissance, et les commandes sont effectuées en fonction du résultat. Des dispositifs de régulation et d'asservissement sont avantageusement utilisés pour la stabilisation de la station et l'optimisation de la collecte d'énergie.

Le cas idéal, du point de vue énergétique, est celui d'un site qui serait souvent concerné par un courant et un vent sensiblement opposés. Dans ce cas, les deux hélices sont mises simultanément en fonctions réceptrices d'énergie, ce qui implique une inversion de sens de transmission entre les deux hélices, à partir de l'une des configurations exposées selon les figures 2, 3, 4 ou 5 ou une inversion de l'un des pas. Les réglages de pas et de transmission sont faits afin d'obtenir la compensation des forces de dérive de la station, en augmentant la traînée axiale par diminution de pas de l'hélice correspondante, qui tend à s'exercer dans le sens inverse à la dérive constatée.

Cette réalisation pourra avantageusement comporter, non pas une transmission mécanique directe entre les hélices aériennes et nautiques, mais comporter des moteurs-générateurs sur chaque hélice. Une partie de l'énergie est alors utilisée pour la stabilisation par alimentation des moteurs des hélices, recevant le cas échéant, une fonction propulsive.

Des versions spécialisées peuvent être réalisées à volonté suivant l'application et le site d'utilisation, par exemple exploitation alternative ou simultanée des vents et des courants, exploitation d'un courant seulement, exploitation d'un vent seulement, site de haute mer, cours d'eau ou détroit... exploitation de courants à faible vitesse, etc.

Dans tous ces cas, l'avantage du système de l'invention est de permettre de supprimer l'amarrage, éliminant ainsi les câbles de traction et les constructions qui constituent des entraves à la navigation, et présentent de nombreux autres inconvénients. En outre, la station peut être utilisée sur des sites, sur lesquels les amarrages et constructions seraient difficiles ou pratiquement impossibles. D'autre part, la station peut être également déplaçable dans certaines limites, par ses propres moyens.

L'énergie produite peut être utilisée sur la station flottante, un bateau-usine par exemple, ou transportée par câbles électriques déposés sur le fond par exemple.

Une autre réalisation est relative à une embarcation à caractère sportif, qui présente les avantages suivants : facilité de manoeuvre quels que soient les vents et les courants, permettant dans une certaine mesure, de se dispenser de moteur auxiliaire pour l'entrée et la sortie d'un port, exploitation des courants (qui sont au contraire, le plus souvent gênants avec les embarcations à voiles), navigation tous azimuts, performances élevées avec les vents de face ainsi que contre les courants (en rivière par exemple), performances nettement supérieures à celle du voilier en vent arrière (et aussi à co-courant).

On a représenté sur la figure 10, une forme de réalisation possible d'une telle application. L'embarcation 1 est de préférence multicoque, du type "Catamaran" par exemple.

L'hélice aérienne 2 peut fonctionner en aérogénérateur ou en propulseur, pour cela, elle comporte des dispositifs de réglage et inversion de pas, et les pales de cette hélice peuvent travailler sur leurs deux faces; leur section peut être symétrique par rapport à leur plan moyen. L'hélice hydraulique 4 doit pouvoir fonctionner en turbine réceptrice ou en propulseur alternativement. Elle peut être à pas variable ou à pas fixe, relativement important. La transmission 5 est mécanique et comporte une boîte de vitesse ou un système de conversion de couple, qui, si l'hélice nautique 4 est à pas variable, ne sont pas indispensables mais restent favorables.

L'hélice aérienne 2 est orientable dans tous les azimuts par rotation d'un pylone support 3 autour d'un axe sensiblement vertical, qui comporte un arbre de transmission co-axial 13. Ce pylone 3 est assujetti à l'embarcation 1 par des paliers à roulements, disposés dans une partie base élargie 14, assujettie elle-même aux deux coques 1a et 1b par des bras de support 15 renforcés par des entretoises 16. L'axe y-y de l'hélice nautique 4, fixe par rapport à l'embarcation, une dérive par coque 17 et un gouvernail 7 sont montés dans le plan axial vertical de l'embarcation, pour l'hélice et dans le plan axial vertical de chaque coque 1a, 1b pour les dérives 17.

La transmission est assurée par, successivement, un couple d'engrenages coniques entre l'arbre de l'hélice aérienne et l'arbre de transmission dans l'axe de pylone support de cette hélice, un autre couple d'engrenages coniques (non visible) entre l'arbre de transmission et l'arbre de l'hélice nautique.

Un poste de commande 20 situé par exemple à l'arrière de cette embarcation centralise toutes les commandes : par exemple, commande de gouvernail, aux pieds, par palonnier 8, réglage de pas de l'hélice aérienne 2 et inversion par un levier 10, s'il y a lieu : réglage de pas et d'inversion de pas de l'hélice nautique 4 par un autre levier 11, commande de boîte de vitesse par un levier 12.

Cette boîte de vitesse étant par exemple à engrenages toujours en prise, du type cycloïdal, réglage d'orientation de l'hélice aérienne par manivelle 9, transmettant la rotation au pylone support 3 sensiblement vertical de l'hélice aérienne 2, par un système de vis et couronne dentée mécaniquement non réversible 21, pour compenser le couple de réaction de la transmission.

Les commandes sont relativement nombreuses, mais elles sont ainsi centralisées, alors que dans un voilier classique, il faut généralement se déplacer souvent.

A une allure déterminée, les réglages étant faits correctement, conformément aux règles définies plus haut, la commande principale est le gouvernail 7, grâce auquel le cap et la route sont conservés. En cas de changement de l'un des facteurs ou de la route, le nouveau cap est atteint grâce à la manoeuvre du gouvernail accompagnée des autres réglages destinés à maintenir les hélices 2 et 4 dans leurs conditions d'utilisations normales, définies plus haut.

Le poste de commande ainsi défini, permet, d'un seul poste de l'embarcation, d'assurer toutes les manoeuvres et l'optimisation de réglages pour la recherche éventuelle des performances.

La possibilité de commander, de façon simple, les organes du système de la présente invention favorise l'usage de dispositifs de pilote automatique. L'orientation de l'hélice aérienne 2 peut alors être commandée, non pas par le système de vis 21, qui est mis hors fonction, mais asservi à un empennage. Le gouvernail 7 peut être asservi à tout facteur permettant, soit le maintien d'une route ou d'un cap, soit une évolution de ceux-ci, par rapport au vent ou au courant, ou à un compas, par exemple.

Les autres réglages, tels ceux des pas, peuvent recevoir des dispositifs d'asservissement, d'optimisation ou d'autorégulation.

Il va d'ailleurs de soi que la présente invention n'a été décrite et représentée qu'à titre d'exemples préférentiels et qu'on pourra y apporter toute équivalence de moyens dans ses éléments constitutifs, sans pour autant sortir du cadre de ladite invention, lequel est défini dans les revendications annexées.

**REVENDICATIONS**

1. Système perfectionné permettant d'assurer la propulsion et l'évolution d'embarcations, à l'aide de l'énergie des courants d'eau et des vents, ainsi que la récupération de l'énergie disponible sur des stations flottantes non amarrées ni ancrées, système caractérisé en ce qu'il comprend, en combinaison :

- au moins une hélice aérienne (2) de préférence à pas variable, ladite hélice étant orientable dans toute direction azimutale contenue dans un plan sensiblement horizontal et pouvant faire fonction d'aérogénérateur ou d'hélice propulsive, alternativement ;
- un dispositif de support (3) en superstructure sur l'unité flottante (1), permettant d'orienter, à volonté, ladite hélice aérienne dans la direction du vent ;
- au moins une hélice nautique (4), montée sous la carène de l'unité flottante, ladite hélice nautique pouvant faire fonction de turbine réceptrice d'énergie ou de propulseur, alternativement ;
- un système de transmission (5) reliant l'arbre de l'hélice aérienne à l'arbre de l'hélice nautique, ladite transmission étant desmodromique ;
- un dispositif directionnel (7) d'un type quelconque connu permettant d'assurer l'évolution de l'unité flottante ; et
- des dispositifs de commande (20) à la disposition du conducteur permettant à ce dernier d'agir à volonté, en dehors de son action sur le dispositif directionnel et sur l'orientation en azimut de l'hélice aérienne, sur au moins deux des trois facteurs suivants : le pas de l'hélice aérienne, le rapport de transmission, le pas de l'hélice nautique, par l'intermédiaire d'organes agissant sur les facteurs considérés.

2. Système selon la revendication 1, caractérisé en ce que l'un au moins des organes (hélice aérienne, hélice nautique, système de transmission) peut comporter un dispositif permettant une inversion de sens, à savoir : inversion de pas de l'une des hélice ou inversion du sens d'entraînement d'une hélice par rapport à l'autre par l'intermédiaire du système de transmission.

3. Système selon la revendication 1, caractérisé en ce que, en vue de permettre la propulsion de l'embarcation qui en est pourvue dans un courant de face et sans vent, on règle les pas de l'hélice nautique et de l'hélice aérienne pour que ce soit l'hélice nautique qui reçoive l'énergie du courant et que l'hélice aérienne communique l'énergie qui lui est transmise par la transmission, à l'atmosphère et devienne propulsive.

4. Système selon la revendication 1, caractérisé en ce que, en vue de permettre la propulsion de l'embarcation qui en est pourvue dans un courant arrière et sans vent, on règle les pas de l'hélice nautique et de l'hélice aérienne pour que l'hélice aérienne entre en rotation, sous l'effet du vent relatif dû à la dérive de l'embarcation sous l'effet du courant, et reçoive un couple important qui est transmis à l'hélice nautique, laquelle tourne alors dans le sens propulsif, la force résultante de celle-ci s'ajoutant à la poussée directe du courant et permettant à l'embarcation d'atteindre une vitesse supérieure à celle du courant.

5. Système selon la revendication 1, caractérisé en ce que, en vue de permettre la propulsion de l'embarcation qui en est pourvue avec un vent de face et sans courant, on règle les pas de l'hélice aérienne et de l'hélice nautique pour que ce soit l'hélice aérienne qui reçoive l'énergie du vent et que l'hélice nautique communique l'énergie qui lui est transmise par la transmission, au milieu liquide et devienne propulsive.

6. Système selon la revendication 1, caractérisé en ce que, en vue de permettre la propulsion de l'embarcation qui en est pourvue avec un vent arrière et sans courant, on règle les pas de l'hélice nautique et de l'hélice aérienne pour que l'hélice aérienne reçoive la poussée directe du vent et que l'hélice nautique reçoive une poussée résultant de la vitesse relative de l'eau, et donne un couple transmis à l'hélice aérienne, laquelle tourne alors dans le sens propulsif.

7. Système selon la revendication 1, caractérisé en ce que, en vue de permettre la propulsion de l'embarcation qui en est pourvue par vent de travers et sans courant, on dirige l'axe de l'hélice aérienne dans la direction du vent apparent résultant de la composition du vent de travers avec la vitesse de l'embarcation et on règle le pas de l'hélice aérienne pour qu'elle soit réceptrice et le pas de l'hélice nautique pour qu'elle soit propulsive.

8. Système selon la revendication 1, caractérisé en ce que, en vue de permettre la propulsion de l'embarcation qui en est pourvue par courant de travers et sans vent, on dirige l'axe de l'hélice nautique dans la direction du courant apparent résultant de la composition de la vitesse de l'embarcation et du courant réel et on règle le pas de l'hélice nautique pour qu'elle soit réceptrice et le pas de l'hélice aérienne pour qu'elle soit propulsive.

9. Système selon la revendication 1, caractérisé en ce que, en vue de permettre la propulsion de l'embarcation qui en est pourvue dans une direction transversale par rapport à celles opposées d'un vent et d'un courant de travers, on oriente l'hélice hydraulique face au courant et on règle son pas pour qu'elle soit réceptrice et on oriente l'hélice aérienne dans une direction sensiblement parallèle à celle de l'hélice nautique, on règle son pas pour qu'elle soit propulsive dans le sens inverse de celui du courant.

10. Système selon la revendication 1, caractérisé en ce que, en vue de permettre la propulsion de l'embarcation qui en est pourvue dans une direction transversale par rapport à celles opposées d'un vent et d'un courant de travers, on oriente l'hélice aérienne face au vent et on règle son pas pour qu'elle soit réceptrice et on oriente l'hélice nautique dans une direction sensiblement parallèle à celle de l'hélice aérienne, on règle son pas pour qu'elle soit propulsive dans le sens inverse de celui du vent.

11. Système selon la revendication 1, caractérisé en ce que, en vue de permettre la récupération d'énergie utilisable d'une plate-forme flottante qui en est munie, soit dans un courant, soit dans une zone ventée, soit encore dans un site concerné par un courant et un vent sensiblement opposés, on règle les pas et les directions des hélices aérienne et nautique pour que celle principalement concernée soit réceptrice d'énergie et l'autre propulsive juste pour assurer la simple stabilisation de la plate-forme, soit que les deux hélices soient réceptrices, les réglages de pas et de la transmission étant faits pour obtenir dans ce cas la compensation des forces de dérive de la plate-forme, en augmentant la traînée axiale par diminution de pas de l'hélice correspondante, qui tend à s'exercer dans le sens inverse à la dérive constatée.

12
11
8
9
10
F12
F11
F8
F9
F10
7a
7
4
4a
6
5
3
2
2a
x
y
1
18
13
3
2
16
15
1b
8
21
14
15
16
17
16
7a
12
11
9
y
4a
15
4
10
7
17
20
1a
1

FIG.1

FIG.10

FIG. 2

FIG.3

FIG.4

FIG.5

FIG.6

FIG.7

FIG.8

FIG.9

**0024998**

Numéro de la demande

Office européen des brevets

# RAPPORT DE RECHERCHE EUROPEENNE

EP 80 40 1237

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | US - A - 2 187 816 (WINTER)<br>* En entier *<br>-- | 1 | B 63 H 13/00<br>7/02<br>F 03 D 9/00<br>F 03 B 17/06 |
| A | GB - A - 993 117 (ZALEWSKI)<br>* En entier *<br>-- | 1,2 | |
| A | DE - C - 807 366 (SCHATZ)<br>* En entier *<br>-- | 1,2 | DOMAINES TECHNIQUES RECHERCHES (Int. Cl. 3) |
| A | FR - A - 2 360 465 (ALBA)<br>* En entier *<br>-- | 1,2 | B 63 H<br>F 03 D<br>F 03 B |
| A | GB - A - 1 481 699 (SEND)<br>* En entier *<br>-- | 1,2 | |
| P | BE - A - 877 557 (MATTHIJS)<br>* En entier *<br>---- | 1 | CATEGORIE DES DOCUMENTS CITES<br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| ∅ | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 04-12-1980 | DE SCHEPPER |

OEB Form 1503.1 06.78